# EUROPÄISCHE PATENTANMELDUNG

(11) **EP 4 462 296 A1**
(43) Veröffentlichungstag der Anmeldung: **13.11.2024**
(21) Anmeldenummer: 23172102.8
(22) Anmeldetag: 08.05.2023
(51) Int. Cl.: G06F 21/57

(54) **WIEDERINBETRIEBNAHME NACH EINER WIEDERHERSTELLUNG EINES TECHNISCHEN SYSTEMS**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft eine Wiederinbetriebnahmeeinheit (4), aufweisend:
- Eine Empfangskomponente, ausgebildet eine Integritätsattestierung (PRDIA) zu empfangen, wobei die Integritätsattestierung (PRDIA) einen Zustand des technischen Systems (1) nach einer Wiederherstellung des technischen Systems (1) attestiert,
- eine Prüfkomponente, ausgebildet anhand des durch die Integritätsattestierung (PRDIA) attestierten Zustands ein Prüfergebnis bereitzustellen, und
- eine Freigabekomponente, ausgebildet einen Betriebsmodus des technischen Systems (1) in Abhängigkeit des Prüfergebnisses freizugeben.

Außerdem betrifft die Erfindung ein zugehöriges Verfahren zur Freigabe eines Betriebsmodus eines technischen Systems (1) nach einer Wiederherstellung des technischen Systems (1).

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft eine Wiederinbetriebnahmeeinheit. Die Erfindung betrifft außerdem ein zugehöriges Verfahren zur Freigabe eines Betriebsmodus eines technischen Systems nach einer Wiederherstellung des technischen Systems.

### Beschreibung des Stands der Technik

Das Wiederherstellen eines integren Systemzustands, insbesondere Gerätezustands, erfolgt insbesondere bei einer Wiederherstellung der Werkseinstellungen (einem "Factory Reset") oder nach einem erfolgreichen Angriff durch eine "Device Resilience Engine" (im Rahmen einer "Device Recovery"). Dabei werden Konfigurationseinstellungen und die Firmware des Systems, insbesondere des Geräts, wieder in einen integren Referenzzustand zurückgesetzt.

Insbesondere bei Geräten oder Systemen mit einer komplexen Softwarearchitektur, z.B. durch eine Unterstützung von Apps, besteht die Gefahr, dass auch nach einer Wiederherstellung der Gerätekonfiguration noch Artefakte auf dem Gerät vorliegen. Dies kann ebenso die Vertrauenswürdigkeit des Geräts gefährden wie den Schutz von Know-How oder den Schutz kryptographischer Schlüssel, z.B. falls nach erfolgter Wiederherstellung unerwartet noch Bestandteile von unerwünschtem Programmcode oder Betriebsdaten oder konfigurierte Schlüssel auf dem Gerät vorliegen. Auch bei einer Wiederherstellung nach einem erfolgreichen Angriff auf das Gerät besteht die Gefahr, dass der Angriff Elemente auf dem Gerät manipuliert hat, die auch nach erfolgter Wiederherstellung noch vorliegen.

Weiterhin besteht die Gefahr, dass eine automatische Gerätewiederherstellung (wie z.B. von "Device Resilience" bei IoT-Geräten bekannt) für einen Angriff verwendet wird, nämlich dann, wenn sich das Gerät nach der Wiederherstellung in einem offenen Betriebszustand befindet, in dem eine automatisierte Inbetriebnahme freigegeben ist (Zero Touch Provisioning). Ein Angreifer könnte dabei zuerst ein eingerichtetes Gerät manipulieren, um es nach der Wiederherstellung mittels der automatisierten Inbetriebnahme zu übernehmen. So kann eine Geräte-Resilienz, wie von Consumer-IoT-Geräten bekannt, insbesondere in industriellen Umgebungen zu unerwünschten Nebeneffekten führen, wenn ein als manipuliert erkanntes Gerät nach einem erfolgten Recovery eigenständig wieder einen regulären Betriebsmodus aufnehmen würde.

Aus "NIST Platform Firmware Resiliency Guidelines", NIST SP 800-193, ist bekannt, dass ein Computer-System (Server) eine "root of trust for recovery" aufweisen kann, über den das Computer-System nach einem Angriff remote und verlässlich wieder in einen integren Zustand neu aufgesetzt werden kann.

"TCG Cyber Resilient Module and Building Block Requirements" beschreibt u.A. eine "Resilience Engine" eines IoT-Geräts, um das IoT-Gerät nach einer Manipulation wieder vertrauenswürdig aufzusetzen. Eine separate "Resilience Authority"-Einheit übermittelt der "Resilience Engine" Anweisungen zu den durchzuführenden Recovery-Aktionen.

Von ETSI EN 303 645 "Cyber Security for Consumer Internet of Things: Baseline Requirements", sind in Abschnitt "5.11 Make it easy for users to delete user data" Anforderungen beschrieben, die es einem Nutzer ermöglichen, seine Nutzerdaten auf dem Gerät zu löschen. Die Anforderung "Provision 5.11-4 Users should be provided with clear confirmation that personal data has been deleted from services, devices and applications." schreibt vor, dass es für einen Nutzer klar erkennbar sein soll, dass er seine Daten auf einem IoT-Gerät gelöscht hat. Dabei ist auch ein "Factory Reset" beschrieben, der die Konfigurationseinstellungen und Nutzerdaten auf dem IoT-Gerät löscht (siehe "Carrying out a factory reset of the product can remove configuration settings or disable the device to the detriment of the apartment owner and a future user" und Anhang A.2 "the Factory Reset process is likely to be the process used to remove all user data and configuration").

Weiterhin ist eine Attestierung bekannt, bei der ein Gerät eine kryptographische Bestätigung zu seiner Integrität bereitstellt, siehe TCG Glossary, "Attestation: The process of vouching for the accuracy of information. External entities can attest to shielded locations, protected capabilities, and Roots of Trust. A platform can attest to its description of platform characteristics that affect the integrity (trustworthiness) of a platform. Both forms of attestation require reliable evidence of the attesting entity.")

Die Aufgabe der Erfindung besteht darin, eine Lösung bereitzustellen, welche Gefahren durch eine Systemwiederherstellung reduziert.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Wiederinbetriebnahmeeinheit, aufweisend:
- Eine Empfangskomponente, ausgebildet eine Integritätsattestierung zu empfangen, wobei die Integritätsattestierung einen Zustand des technischen Systems nach einer Wiederherstellung des technischen Systems attestiert,
- eine Prüfkomponente, ausgebildet anhand des durch die Integritätsattestierung attestierten Zustands ein Prüfergebnis bereitzustellen, und
- eine Freigabekomponente, ausgebildet einen Betriebsmodus des technischen Systems in Abhängigkeit des Prüfergebnisses freizugeben.

Der Zustand des technischen Systems betrifft Eigenschaften des technischen Systems, aus welchen sich Aussagen zu dessen Integrität ableiten lassen. Dafür kann insbesondere eine Richtlinie herangezogen werden, welche vorgibt, welche Eigenschaften zulässig sind und damit zu einem integren Zustand führen.

Die Wiederherstellung ist insbesondere als eine Wiederherstellung eines Originalzustands des technischen Systems insbesondere bei einem Factory Reset oder nach einem erfolgreichen Angriff insbesondere durch eine Device Resilience Engine (auch als ein Recovery des technischen Systems zu beschreiben) .

Die Prüfkomponente ist somit insbesondere ausgebildet, den attestierten Zustand zu prüfen und ein Prüfergebnis bereitzustellen.

Der Betriebsmodus des technischen Systems ist insbesondere als der Modus zu verstehen, in welchem das technische System seiner eigentlichen Aufgabe und/oder Funktion nachgeht, insbesondere ein operativer Einsatz oder eine automatisierte Inbetriebnahme (Zero Touch Provisioning).

Die Wiederinbetriebnahmeeinheit kann lokal auf dem technischen System ausgebildet sein, oder extern angeordnet sein und dem technischen System den Betriebsmodus freigeben, insbesondere durch eine Freigabebestätigung, welche dem technischen System bereitgestellt wird.

Die Erfindung ist insbesondere vorgesehen für ein technisches Gerät, insbesondere ein IoT-Gerät und/oder Steuergerät, mit einer Geräteresilienzfunktion (auch Gerätewiederherstellungsfunktion), die das Gerät nach einer Manipulation und/oder einem Factory Reset wieder in einen integren Zustand zurückversetzt (eigenständig oder unter Kontrolle einer externen Resilience Authority). Nach dem Zurückversetzten in den (zu prüfenden) integren Gerätezustand wird nach einem Aspekt der Erfindung überprüft, ob eine Wiederinbetriebnahme zulässig ist, d.h. ob der Gerätebetriebsmodus wieder aktiviert werden darf. Dazu wird eine Integritätsattestierung des Geräts gebildet und einer erfindungsgemäßen Wiederinbetriebnahmeeinheit bereitgestellt. Mittels der Geräteintegritätsattestierung kann die Wiederinbetriebnahmeeinheit prüfen, ob sich das Gerät tatsächlich in einem zulässigen (integren) Zustand befindet, d.h. ob das Zurückversetzen erfolgreich war (d.h. auf die durchgeführte Weise zulässig war). Dadurch wird verhindert, dass ein manipuliertes Gerät nach einem Zurückversetzten durch eine Geräteresilienzfunktion unkontrolliert wieder einen operativen Betriebsmodus aktiviert. Dadurch wird verhindert, dass bei einem nicht erfolgreichen Wiederherstellungsversuch das betroffene Gerät wieder einen Betriebsmodus aktiviert.

In einer Weiterbildung der Erfindung ist der Betriebsmodus ausgebildet als:
- Eine operative Funktionalität und/oder
- eine automatische oder automatisierte Inbetriebnahme-Funktionalität.

Der Betriebsmodus ist nach dieser Ausführungsform als operative Funktionalität, auch als Hauptfunktionalität, Zweck oder Hauptaufgabe bezeichenbar, insbesondere eine Steuerungsfunktion oder eine Überwachungsfunktion, auch zu bezeichnen als des Geräts) und/oder eine Funktion für eine automatische oder automatisierte Inbetriebnahme (insbesondere Zero Touch Provisioning, Autoconfiguration, Plug&Play, Plug&Produce) ausgebildet. Abhängig vom Prüfergebnis erfolgt eine Freigabe des Betriebsmodus.

In einer weiteren Weiterbildung der Erfindung ist die Freigabekomponente außerdem ausgebildet, den Betriebsmodus des technischen Systems in Abhängigkeit einer Nutzereingabe freizugeben.

Nach dieser Ausführungsform erfolgt eine Freigabe des Betriebsmodus nicht nur in Abhängigkeit des Prüfergebnisses, sondern zusätzlich in Abhängigkeit der Nutzereingabe. So kann insbesondere eine manuelle Freigabe erfolgen, z.B. durch einen Betreiber oder Wartungstechniker. Dies ist insbesondere von Vorteil, wenn der Betriebsmodus ausgebildet ist als eine automatische oder automatisierte Inbetriebnahme-Funktionalität.

Das technische System, insbesondere ein Gerät, kann sich nach erfolgter Wiederherstellung, insbesondere Gerätewiederherstellung, in einem Initialzustand (Factory Default) befinden, in dem es noch nicht eingerichtet (provisioniert, gehärtet) ist. In dieser Betriebsphase kann beispielsweise ein automatisiertes Einrichten (Zero Touch Provisioning) durch die Inbetriebnahme-Funktionalität aktiviert sein, und/oder auf dem technischen System ist noch kein Gerätemanagement-Server konfiguriert, der das technische System konfigurieren und dessen Firmware aktualisieren kann. Daher kann das technische System nach einer erfolgten Wiederherstellung gefährdet sein. Es wird vorgeschlagen, dass eine automatische oder automatisierte Wiederinbetriebnahme (Zero Touch Provisioning, Onboarding) nach einer erfolgten Wiederherstellung erst nach einer zusätzlichen, expliziten Freigabe freigeschaltet wird. Dies kann beispielsweise durch einen Nutzer erfolgen. Dadurch wird ein Missbrauch einer automatischen Wiederherstellung erschwert. Die Freigabe der automatischen/automatisierten Wiederinbetriebnahme nach erfolgter Wiederherstellung kann beispielsweise durch eine lokale Geräteinteraktion erfolgen (z.B. Tastendruck, Lösen des Geräts aus einer Halterung, Abziehen/Anstecken eines Netzwerksteckers) oder remote durch Übermitteln eines Autokonfigurations-Freigabe-Codes von einer separaten Wiederanlauf-Freigabeeinheit an das technische System.

So bietet die Erfindung nach dieser Ausführungsform einem Betreiber die Möglichkeit zu kontrollieren, wann ein betroffenes technisches System wieder den Betriebsmodus aktivieren kann. Dabei kann der Betreiber in der bevorzugten Variante inhaltlich selbst auf verlässliche Weise überprüfen, dass sich das betroffene technische System tatsächlich wieder in einem zulässigen Zustand befindet. Dadurch ist mit höherer Verlässlichkeit gewährleistet, dass die Recovery-Aktion erfolgreich war, bevor das technische System wieder einen Betriebsmodus aktiviert.

In einer weiteren Weiterbildung der Erfindung weist die Wiederinbetriebnahmeeinheit außerdem auf:
- Eine Bestätigungskomponente, ausgebildet eine Freigabebestätigung in Abhängigkeit des Prüfergebnisses bereitzustellen.

Falls eine Freigabe des Betriebsmodus zulässig ist, da der Zustand nach der Wiederherstellung zulässig ist, stellt die Bestätigungskomponente insbesondere dem technischen System eine Freigabebestätigung/Freigabeinformation bereit.

In einer weiteren Weiterbildung der Erfindung weist die Freigabebestätigung einen kryptographischen Schutz auf.

Die Freigabebestätigung ist nach dieser Ausführungsform eine kryptographisch geschützte Freigabebestätigung.

In einer weiteren Weiterbildung der Erfindung ist die Freigabekomponente außerdem ausgebildet, den Betriebsmodus des technischen Systems in Abhängigkeit der Freigabebestätigung freizugeben.

Nach dieser Ausführungsform erfolgt eine Freigabe des Betriebsmodus nicht nur in Abhängigkeit des Prüfergebnisses, sondern zusätzlich in Abhängigkeit der Freigabebestätigung.

In einer weiteren Weiterbildung der Erfindung ist die Freigabebestätigung als ein Freigabecode ausgebildet.

Der Freigabecode kann insbesondere durch einen Nutzer in Form einer Nutzereingabe an die Freigabekomponente gegeben werden. Die Freigabekomponente ist nach dieser Ausführungsform bevorzugt ausgebildet, den Betriebsmodus des technischen Systems in Abhängigkeit einer Nutzereingabe freizugeben.

Somit ist es insbesondere möglich, dass das technische System/Gerät eine kryptographisch geschützte Geräteintegritätsattestierung bildet, die dem Integritätszustand des Geräts nach erfolgter Gerätewiederherstellung charakterisiert, und diese an die Wiederinbetriebnahmeeinheit, insbesondere ein Onboarding-System, das als Wiederanlauf-Freigabeeinheit fungiert, zur Prüfung übermittelt. Abhängig vom Prüfergebnis erhält das Gerät einen Freigabecode zur Aktivierung oder zur Freigabe eines Betriebsmodus, insbesondere einer Autokonfigurations-Funktionalität für ein Zero Touch Provisioning. Insbesondere kann dabei der Zugriff auf ein kryptographisches Gerätecredential (der private Geräteschlüssel, der der IDevID des Geräts (initiales Geräteauthentisierungszertifikat, Herstellerzertifikat) zugeordnet ist), das für eine Autokonfiguration bzw. für ein Zero Touch Provisioning benötigt wird, freigegeben werden. Der Freigabecode ist vorzugsweise kryptographisch geschützt. Er kann dann als kryptographische Freigabebestätigung bezeichnet werden. Außerdem kann das Onboarding-System das automatische/automatisierte Onboarding (Zero Touch Provisioning) für das betroffene Gerät freigeben, d.h. dass das Onboarding-System bei sich das Onboarding für das betroffene Gerät freischaltet, sodass es wieder eingerichtet werden kann. Die Hauptfunktion (operative Funktionalität) des technischen Systems wird hingegen insbesondere bereits ohne den Freigabecode freigegeben.

In einer weiteren Weiterbildung der Erfindung attestiert die Integritätsattestierung einen Zustand von:
- einer Firmware und/oder
- einer Konfiguration und/oder
- eine Konfigurationseinstellung (insbesondere Factory Default) und/oder
- einer Software und/oder
- einer Hardware-Komponente (insbesondere eine Komponente mit einer Identität, insbesondere ein Netzwerkadapter, ein Speicherbaustein, und/oder ein Prozessor) und/oder
- einem Speicherbereich und/oder
- einem Zertifikatsspeicher und/oder
- einem Dateisystem
des technischen Systems nach der Wiederherstellung des technischen Systems.

Der Zustand der genannten Option betrifft Eigenschaften dieser, aus welchen sich Aussagen zu dessen Integrität ableiten lassen. Dafür kann insbesondere eine Richtlinie herangezogen werden, welche vorgibt, welche Eigenschaften zulässig sind und damit zu einem integren Zustand führen.

In einer weiteren Weiterbildung der Erfindung stellt die Integritätsattestierung zu:
- einer Datei und/oder
- einer Komponente und/oder
- einem Fingerprint einer Komponente und/oder
- einem ungenutzten Speicherbereich und/oder
- einem als freigegeben erwarteten Speicherbereich (d.h. eine Information, ob nicht genutzte Speicherbereiche im Dateisystem oder in einem Flash-Speicherbaustein oder einem Arbeitsspeicher (RAM) oder in einem Konfigurationsspeichermodul oder in einem Sicherheitselement durch ein "Wipe", d.h. ein Überschreiben des nicht genutzten Speicherbereichs, wie vorgesehen überschrieben sind) und/oder
- einem kryptographischen Schlüssel und/oder
- einem Zertifikat und/oder
- einer Berechtigung
des technischen Systems eine erste Angabe bereit.

Über die erste Angabe leitet die Prüfkomponente insbesondere das Prüfergebnis ab und stellt fest, ob sich das technische System in einem tatsächlich integren Zustand befindet.

In einer weiteren Weiterbildung der Erfindung stellt die Integritätsattestierung zu:
- einer unerwarteten Datei und/oder
- einer unerwarteten Komponente und/oder
- einem unerwarteten Fingerprint einer Komponente und/oder
- einem unerwarteten kryptographischen Schlüssel und/oder
- einem unerwarteten Zertifikat und/oder
- einer unerwarteten Berechtigung
des technischen Systems eine zweite Angabe bereit.

Über die zweite Angabe leitet die Prüfkomponente insbesondere das Prüfergebnis ab und stellt fest, ob sich das technische System in einem tatsächlich integren Zustand befindet.

Falls keine der als unerwartet gelisteten Optionen auf dem technischen System gefunden wurde, ist die zweite Angabe insbesondere negativ ausgeprägt.

Somit wird nach dieser Ausführungsform nicht nur die Integrität vorliegender Information geprüft, sondern insbesondere auch, dass keine zusätzliche, nicht erwartete Information noch in einem Speicherbereich oder Dateisystem vorhanden ist, oder dass zusätzliche Komponenten im technischen System/Gerät vorhanden sind. Es könnte trotz vorgenommener Wiederherstellung (z.B. Einspielen einer Referenz-Firmware, Zurücksetzen von Konfigurationseinstellungen auf Gerätehersteller-Default-Werte) noch versehentlich eine Restinformation auf dem Gerät vorliegen. Es kann daher bei einer Gerätewiederherstellung eine Geräteintegritätsprüfung erfolgen, die verifiziert, dass ausschließlich die erwünschte Information (Firmware, Konfigurationseinstellungen, Schlüssel, Zertifikate) vorliegt und dass diese integer ist. Dadurch wird mit hoher Verlässlichkeit erreicht, dass das Gerät nach einem erfolgreichen Wiederherstellen sich tatsächlich in einem vertrauenswürdigen, integren Zustand befindet und dass weiterhin keine unzulässigen Artefakte der zurückliegenden Konfiguration vorliegen.

In einer weiteren Weiterbildung der Erfindung betrifft der Zustand, welchen die Integritätsattestierung attestiert, eine Vertrauenswürdigkeit des technischen Systems.

Der Zustand umfasst somit Eigenschaften des technischen Systems, aus welchen abzuleiten ist, ob das technische System als vertrauenswürdig angesehen wird.

In einer weiteren Weiterbildung der Erfindung ist die Wiederinbetriebnahmeeinheit extern des technischen Systems ausgebildet.

Die Erfindung umfasst außerdem ein technisches System, aufweisend:
- eine Wiederinbetriebnahmeeinheit nach einem der vorherigen Ansprüche und
- eine Wiederherstellungseinheit (auch als Geräteresilienzfunktion, Gerätewiederherstellungsfunktion und/oder "Device Resilience Module" bezeichenbar) und/oder
- eine Attestiereinheit, ausgebildet die Integritätsattestierung, welche den Zustand des technischen Systems nach der Wiederherstellung des technischen Systems attestiert, zu erstellen.

Das technische System ist insbesondere ausgebildet als:
- ein Gerät und/oder
- ein IoT-Gerät und/oder
- Steuergerät.

In einer Weiterbildung der Erfindung weist das erfindungsgemäße technisches System außerdem auf:
- eine Ausführungsumgebung für den Betriebsmodus.

Die Ausführungsumgebung umfasst insbesondere eine Lauzeitumgebung für Apps/Applikationen.

Die Erfindung umfasst außerdem ein Verfahren zur Freigabe eines Betriebsmodus eines technischen Systems nach einer Wiederherstellung des technischen Systems
mit den Schritten:
- Ein Empfangen einer Integritätsattestierung, wobei die Integritätsattestierung einen Zustand des technischen Systems nach der Wiederherstellung des technischen Systems attestiert,
- ein Bereitstellen eines Prüfergebnisses anhand des durch die Integritätsattestierung attestierten Zustands, und
- ein Freigeben des Betriebsmodus des technischen Systems in Abhängigkeit des Prüfergebnisses.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer externen Wiederinbetriebnahmeeinheit, und
- Fig. 2: eine schematische Darstellung einer internen Wiederinbetriebnahmeeinheit.

### DETAILLIERTE BESCHREIBUNG DER ERFINDUNG

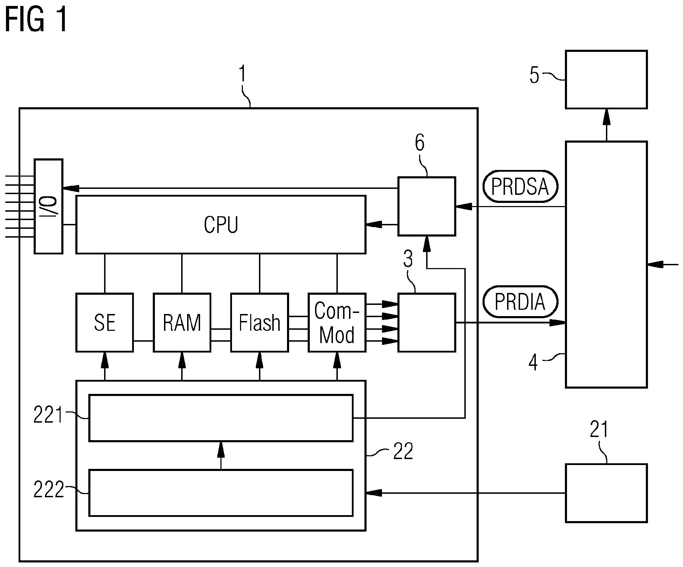

Fig. 1 zeigt eine schematische Darstellung einer externen Wiederinbetriebnahmeeinheit 4 mit einem technischen System 1. Das technische System 1 ist in Fig. 1 ein Steuergerät 1 (insbesondere Cyber-resilient Industrial IoT Device 1) mit einem Prozessor CPU, Programm- und Konfigurationsspeicher Flash, Arbeitsspeicher RAM, einem Kommunikationsmodul ComMod, einem Sicherheitselement SE und einer Ein-Ausgabeschnittstelle I/O zum Verbinden von Sensoren und Aktuatoren. Das Steuergerät 1 verfügt über ein Resilienz-Modul 22 (auch Device Resilience Modul 22) mit einer Resilience Engine 221, die auf Anweisung einer Resilience Authority 21 das Steuergerät 1 wieder in einen integren Referenzzustand (durch ein Recovery Image 222 versetzen kann. Optionale Maßnahmen sind: Prozessor CPU anhalten, Flash-Speicher Flash mit definiertem Recovery-Inhalt beschreiben, Arbeitsspeicher RAM löschen, Zugriff auf Sicherheitselement SE sperren oder einschränken. Weiterhin wird dabei die Aktivierung eines regulären operativen Betriebsmodus gesperrt (durch einen Post-Recovery Device Operation Mode Lock 6). Im dargestellten Fall wird die Ein-Ausgabeschnittstelle I/O im gesperrten Zustand blockiert, und dem Prozessor CPU wird eine Information zum Betriebsmodus bereitgestellt, sodass die darauf ausgeführte Software darauf entsprechend reagieren kann.

Nach Durchführung der vorgegebenen Recovery-Maßnahmen bildet die "Post-Recovery Device Integrity Attestation Unit" 3 eine Post-Recovery Device Integrity Attestation PRDIA und überträgt sie der Wiederinbetriebnahmeeinheit 4 (auch Wiederanlauf-Freigabeeinheit 4 oder Post-Recovery Device Operation Approval Unit 4). Diese überprüft die Post-Recovery Device Integrity Attestation PRDIA und ermittelt, ob eine Wiederaufnahme eines regulären Betriebsmodus zulässig ist durch ein Prüfergebnis. Wenn dies der Fall ist, wird dem Steuergerät 1 eine Freigabebestätigung PRDSA (Post-Recovery Device Startup Attestation PRDSA) kryptographisch geschützt über TLS bereitgestellt, oder es wird dem Steuergerät 1 eine kryptographisch geschützte Freigabebestätigung PRDSA bereitgestellt. Dies führt zur Aufhebung der Sperre 6, d.h. dass der operativen Betriebsmodus wieder durch das Gerät 1 erfolgt. Weiterhin kann eine erneute Provisionierung des Steuergeräts 1 durch eine Provisierungseinheit 5 (Zero Touch Provisioning Unit 5) freigegeben werden.

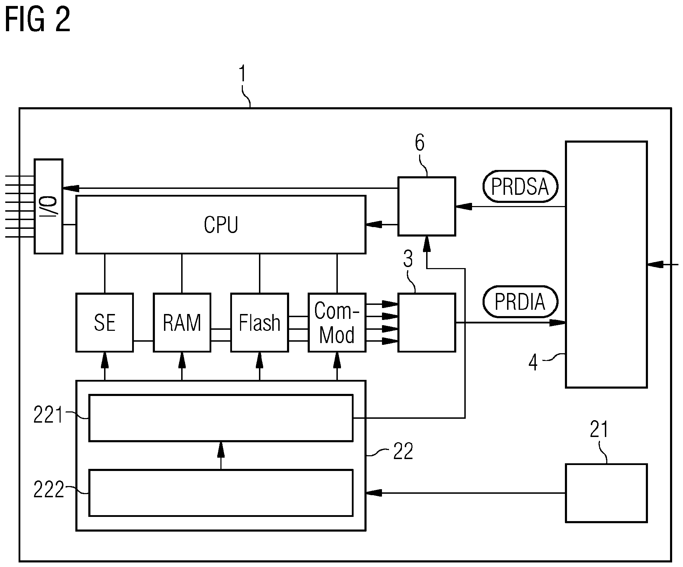

Fig. 2 zeigt eine schematische Darstellung einer internen Wiederinbetriebnahmeeinheit. Es sind die Komponenten wie in Fig. 1 beschrieben dargestellt. Anders als in Fig. 1 weist das Steuergerät 1 bei dieser Variante eine integrierte Resilienz-Authority 21 und einer integrierte Wiederinbetriebnahmeeinheit 4 (auch Wiederanlauf-Freigabeeinheit 4 oder Post-Recovery Device Operation Approval Unit 4) zur Überprüfung, ob die Recovery-Aktion erfolgreich war, auf.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Wiederinbetriebnahmeeinheit (4),
aufweisend:
- Eine Empfangskomponente, ausgebildet eine Integritätsattestierung (PRDIA) zu empfangen, wobei die Integritätsattestierung (PRDIA) einen Zustand des technischen Systems (1) nach einer Wiederherstellung des technischen Systems (1) attestiert,
- eine Prüfkomponente, ausgebildet anhand des durch die Integritätsattestierung (PRDIA) attestierten Zustands ein Prüfergebnis bereitzustellen, und
- eine Freigabekomponente, ausgebildet einen Betriebsmodus des technischen Systems (1) in Abhängigkeit des Prüfergebnisses freizugeben.

2. Wiederinbetriebnahmeeinheit (4) nach Anspruch 1,
wobei der Betriebsmodus ausgebildet ist als:
- Eine operative Funktionalität und/oder
- eine automatische oder automatisierte Inbetriebnahme-Funktionalität.

3. Wiederinbetriebnahmeeinheit (4) nach einem der vorhergehenden Ansprüche,
wobei die Freigabekomponente außerdem ausgebildet ist, den Betriebsmodus des technischen Systems (1) in Abhängigkeit einer Nutzereingabe freizugeben.

4. Wiederinbetriebnahmeeinheit (4) nach einem der vorhergehenden Ansprüche,
außerdem aufweisend:
- Eine Bestätigungskomponente, ausgebildet eine Freigabebestätigung (PRDSA) in Abhängigkeit des Prüfergebnisses bereitzustellen.

5. Wiederinbetriebnahmeeinheit (4) nach Anspruch 4,
wobei die Freigabebestätigung (PRDSA) einen kryptographischen Schutz aufweist.

6. Wiederinbetriebnahmeeinheit (4) nach Anspruch 4 oder 5, wobei die Freigabekomponente außerdem ausgebildet ist, den Betriebsmodus des technischen Systems (1) in Abhängigkeit der Freigabebestätigung (PRDSA) freizugeben.

7. Wiederinbetriebnahmeeinheit (4) nach einem der Ansprüche 4 bis 6,
wobei die Freigabebestätigung (PRDSA) als ein Freigabecode ausgebildet ist.

8. Wiederinbetriebnahmeeinheit (4) nach einem der vorhergehenden Ansprüche,
wobei die Integritätsattestierung (PRDIA) einen Zustand von:
- einer Firmware und/oder
- einer Konfiguration und/oder
- einer Konfigurationseinstellung und/oder
- einer Software und/oder
- einer Hardware-Komponente und/oder
- einem Speicherbereich und/oder
- einem Zertifikatsspeicher und/oder
- einem Dateisystem
des technischen Systems (1) nach der Wiederherstellung des technischen Systems (1) attestiert.

9. Wiederinbetriebnahmeeinheit (4) nach einem der vorhergehenden Ansprüche,
wobei die Integritätsattestierung (PRDIA) zu:
- einer Datei und/oder
- einer Komponente und/oder
- einem Fingerprint einer Komponente und/oder
- einem ungenutzten Speicherbereich und/oder
- einem als freigegeben erwarteten Speicherbereich und/oder
- einem kryptographischen Schlüssel und/oder
- einem Zertifikat und/oder
- einer Berechtigung
des technischen Systems (1) eine erste Angabe bereitstellt.

10. Wiederinbetriebnahmeeinheit (4) nach einem der vorhergehenden Ansprüche,
wobei die Integritätsattestierung (PRDIA) zu:
- einer unerwarteten Datei und/oder
- einer unerwarteten Komponente und/oder
- einem unerwarteten Fingerprint einer Komponente und/oder
- einem unerwarteten kryptographischen Schlüssel und/oder
- einem unerwarteten Zertifikat und/oder
- einer unerwarteten Berechtigung
des technischen Systems (1) eine zweite Angabe bereitstellt.

11. Wiederinbetriebnahmeeinheit (4) nach einem der vorhergehenden Ansprüche,
wobei der Zustand, welchen die Integritätsattestierung (PRDIA) attestiert, eine Vertrauenswürdigkeit des technischen Systems (1) betrifft.

12. Wiederinbetriebnahmeeinheit (4) nach einem der vorhergehenden Ansprüche,
ausgebildet extern des technischen Systems (1).

13. Technisches System,
aufweisend:
- eine Wiederinbetriebnahmeeinheit (4) nach einem der vorherigen Ansprüche und
- eine Wiederherstellungseinheit (22) und/oder
- eine Attestiereinheit (3), ausgebildet die Integritätsattestierung (PRDIA), welche den Zustand des technischen Systems (1) nach der Wiederherstellung des technischen Systems (1) attestiert, zu erstellen.

14. Technisches System nach Anspruch 13,
außerdem aufweisend:
- eine Ausführungsumgebung für den Betriebsmodus.

15. Verfahren zur Freigabe eines Betriebsmodus eines technischen Systems (1) nach einer Wiederherstellung des technischen Systems (1)
mit den Schritten:
- Ein Empfangen einer Integritätsattestierung (PRDIA), wobei die Integritätsattestierung (PRDIA) einen Zustand des technischen Systems (1) nach der Wiederherstellung des technischen Systems (1) attestiert,
- ein Bereitstellen eines Prüfergebnisses anhand des durch die Integritätsattestierung (PRDIA) attestierten Zustands, und
- ein Freigeben des Betriebsmodus des technischen Systems (1) in Abhängigkeit des Prüfergebnisses.
